# EUROPEAN PATENT APPLICATION

(11) **EP 4 730 266 A1**
(43) Date of publication of application: **22.04.2026**
(21) Application number: 24843402.9
(22) Date of filing: 09.07.2024
(51) Int. Cl.: G06T 11/60, G06T 7/10, G06T 11/20, G06F 3/0484

(54) **ELECTRONIC DEVICE AND METHOD FOR MANAGING EDITING OBJECT BY USING SAME**

(30) Priority: 20.07.2023 KR 20230094740
(71) Applicant: Samsung Electronics Co., Ltd., Suwon-si, Gyeonggi-do 16677 (KR)
(72) Inventor: LEE, Joohyung, Suwon-si, Gyeonggi-do 16677 (KR); THANH, Nguyen Trung, Suwon-si, Gyeonggi-do 16677 (KR); KWON, Younguk, Suwon-si, Gyeonggi-do 16677 (KR)
(74) Representative: HGF
(86) International application number: PCT/KR2024/009803
(87) International publication number: WO 2025/018683

(57) **Abstract**

According to an embodiment, an electronic device may comprise: a display; a memory that stores one or more computer programs; and one or more processors operatively connected to the display and the memory. The one or more computer programs, when individually or collectively executed by the one or more processors (120), may cause the electronic device (101) to: in response to performing of an editing function on a first image, identify an editing object to be added to the first image; determine the size of at least one block on the basis of information regarding the editing object; partition the editing object on the basis of the at least one block having the determined size; extract, from among the at least one block, at least one significant block at least partially including the editing object; and store an integrated block generated on the basis of the at least one significant block. Other various embodiments may be possible.

## Description

### [Technical Field]

An embodiment of the disclosure relates to an electronic device and a method of managing an editing object using the same.

### [Background Art]

An electronic device having a camera module may provide various types of decorative effects (e.g., applying a filter, tone correction, cropping, face correction, auto correction, applying a dual mode filter, entering a sticker, entering text (e.g., pen)) after capturing a video (e.g., image, image frame). The electronic device may at least partially apply decorative effects to the captured video using an editing function.

The above information may be provided as the related art for the purpose of assisting in the understanding of the disclosure. No assertion or determination is made as to whether any of the above description may be applied as the prior art related to the disclosure.

### [Disclosure of Invention]

### [Technical Problem]

An electronic device having a camera module may capture a video (e.g., image) and perform an editing function for at least partially editing the captured video. The electronic device may perform an editing function on the captured video using various editing application programs. For example, an application that provides an editing function may separately store an original video and editing-related information, but additional editing (e.g., correction, addition, deletion, change) of the editing-related information may be difficult. When a secondary editing function is performed after a primary editing function is performed, additional editing following the primary editing may be difficult. Even in the case that a secondary editing function is provided, the problem of insufficient storage space may occur because both editing information and an editing process related to the primary editing are stored.

According to an embodiment, an electronic device may separately store and manage an original video and editing-related information. The electronic device may provide a method of efficiently storing editing-related information in a memory. The electronic device may efficiently compress editing-related information including editing information and an editing process, and manage the compressed information by matching it to the original video. When performing a re-editing function, the electronic device may quickly decompress the stored original video and the editing-related information, and improve usability of the re-editing (e.g., subsequent editing) function.

In the case of re-editing an edited video, the electronic device may individually store the original video and editing-related information from the first editing stage so that decorative effects applied during a previous editing stage (e.g., first editing stage) may be modified. For example, when re-editing, the electronic device may restore an edited video that reflects the editing-related information from the first editing stage based on the stored original video.

The electronic device may store each of the original video and editing-related information from the editing process, and when re-editing, may provide further editing of previously applied decorative effects.

The technical problems to be achieved in the disclosure are not limited to those described above, and other technical problems that are not described may be clearly understood by those of ordinary skill in the art from the following description.

### [Solution to Problem]

According to an embodiment, an electronic device may include a display, a memory configured to store one or more computer programs, and one or more processors operatively connected to the display and the memory. When the one or more computer programs are individually or collectively executed by the one or more processors, the programs may cause the electronic device, in response to performing an editing function on a first image, to identify an editing object added to the first image, to determine a size of at least one block based on information of the editing object, to divide the editing object based on at least one block of the determined size, to extract at least one significant block in which the editing object is at least partially included from the at least one block, and to store an integrated block generated based on the at least one significant block.

According to an embodiment, a method of managing an editing object may include, in response to performing an editing function on a first image, identifying an editing object added to the first image; determining a size of at least one block based on information of the editing object; dividing the editing object based on the at least one block of the determined size; extracting at least one significant block in which the editing object is at least partially included from the at least one block; and storing an integrated block generated based on the at least one significant block.

According to an embodiment, a non-transitory computer readable storage medium (or computer program product) storing one or more programs may be described. According to an embodiment, one or more programs may include instructions that, when executed by a processor of an electronic device, perform, in response to performing an editing function on a first image, identifying an editing object added to the first image, determining a size of at least one block based on information of the editing object, dividing the editing object based on the at least one block with the determined size, extracting at least one significant block in which the editing object is at least partially included from the at least one block, and generating an integrated block based on the at least one significant block.

### [Advantageous Effects of Invention]

According to an embodiment, an electronic device can provide a method of efficiently compressing and decompressing an original video and editing-related information when separately storing and managing the original video and editing-related information. For example, the editing-related information may include various types of decorative effects such as applying effects configured based on the original video (e.g., filter application, tone correction, color correction), or additionally inputting editing objects (e.g., drawing objects, stickers, text, speech bubbles). When managing the editing objects, the electronic device can separate the editing objects into significant blocks and in-significant blocks according to characteristics of the editing objects, and extract only the significant blocks to perform a compression operation.

According to an embodiment, the electronic device can efficiently determine a size of a block when classifying an editing object into significant blocks and in-significant blocks, and perform an operation of compressing a block classified as a significant block or decompressing a block classified as the significant block. The electronic device can separately integrate and manage only blocks corresponding to significant blocks, and efficiently utilize a storage space. The electronic device can determine a size of the block and a storage space of the memory in an optimized manner, and improve user convenience in performing an editing function.

According to an embodiment, the electronic device can perform an additional editing function following an editing order in a previous editing step, and provide an "undo function" and a "redo function" according to the editing function. By individually managing editing-related information, the electronic device can efficiently utilize a storage space of the memory, and perform more quickly compression and decompression operations of the editing-related information. The electronic device can improve user convenience when performing an editing function on a video.

Effects that can be obtained from the disclosure are not limited to the above-described effects, and other effects that are not described will be clearly understood by those of ordinary skill in the art to which the disclosure belongs from the description below.

### [Brief Description of Drawings]

In connection with the description of the drawings, the same or similar reference numerals may be used for the same or similar components.
FIG. 1 is a block diagram illustrating an electronic device in a network environment according to an embodiment of the disclosure.
FIG. 2 is a block diagram illustrating an electronic device according to an embodiment of the disclosure.
FIG. 3 is an exemplary diagram illustrating an editing object management process according to an embodiment of the disclosure.
FIG. 4 is an exemplary diagram illustrating an editing object application process according to an embodiment of the disclosure.
FIG. 5 is a flowchart illustrating a method of managing an editing object according to an embodiment of the disclosure.
FIG. 6 is an exemplary diagram illustrating a method of extracting at least one editing object from an image or video according to an embodiment of the disclosure.
FIG. 7A is a diagram of an example 1-1 illustrating a method of determining a size of a block based on an editing object according to an embodiment of the disclosure.
FIG. 7B is a diagram of an example 1-2 illustrating a method of integrating and managing extracted significant blocks according to an embodiment of the disclosure.
FIG. 8A is a diagram of an example 2-1 illustrating a method of determining a size of a block based on an editing object according to an embodiment of the disclosure.
FIG. 8B is a diagram of an example 2-2 illustrating a method of integrating and managing extracted significant blocks according to an embodiment of the disclosure.
FIG. 9A is a diagram of an example 3-1 illustrating a method of synthesizing a first integrated block based on a first editing object and a second integrated block based on a second editing object into one block and managing the synthesized block according to an embodiment of the disclosure.
FIG. 9B is a diagram of an example 3-2 illustrating a method of managing the remaining storage areas according to the size difference of blocks when synthesizing a plurality of integrated blocks into one block according to an embodiment of the disclosure.

### [Mode for the Disclosure]

Hereinafter, embodiments of the disclosure will be described in detail with reference to the drawings such that a person ordinarily skilled in the art to which the disclosure belongs can easily carry out the disclosure. However, the disclosure may be implemented in many different forms, and is not limited to the embodiments described herein. In connection with a description made with reference to the drawings, the same or similar reference numerals may be used for the same or similar elements. In addition, in the drawings and related descriptions, descriptions of well-known functions and configurations may be omitted for clarity and brevity.

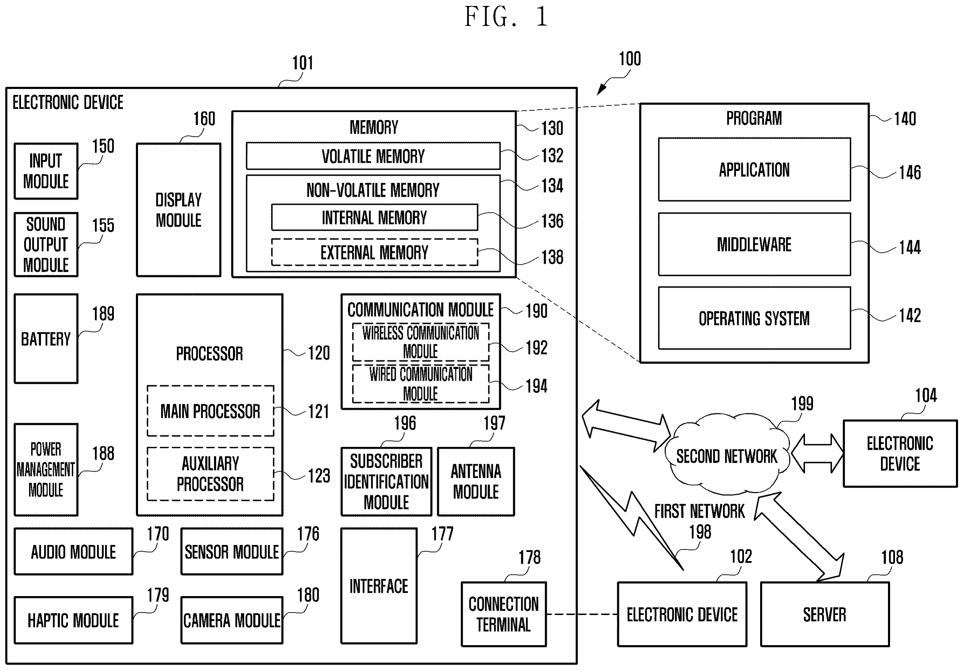

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)(e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). For example, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

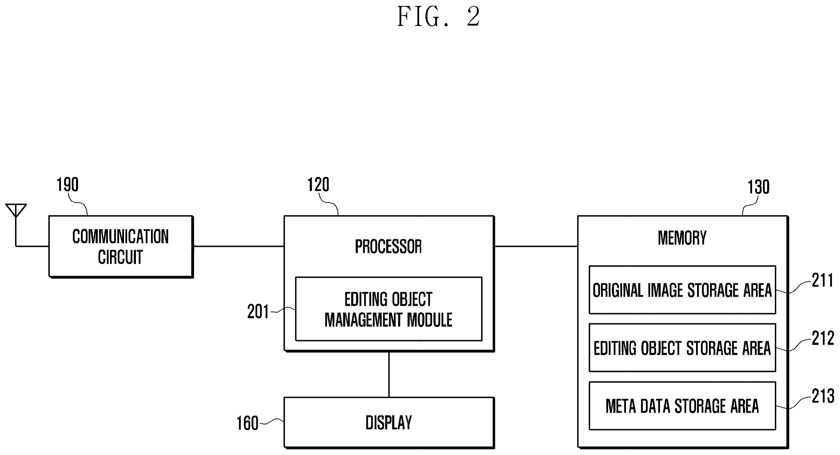

FIG. 2 is a block diagram illustrating an electronic device according to an embodiment of the disclosure.

An electronic device 101 of FIG. 2 (e.g., the electronic device 101 of FIG. 1) may be at least partially similar to the electronic device 101 of FIG. 1, or may further include other components of the electronic device. For example, the electronic device 101 may have an application program installed to provide an editing function for videos or images (e.g., image frames). The electronic device 101 may apply a specific effect to the image, or may additionally input an editing object (e.g., decoration object) to a portion of the image.

According to an embodiment, the electronic device 101 may perform an editing function on at least one of a video (e.g., original image, image, image frame) captured using a camera (e.g., the camera module 180 of FIG. 1) or an image stored in a memory (e.g., the memory 130 of FIG. 1). For example, the editing function may include a function of applying specific effects (e.g., sepia, black and white, emphasis) to a video (e.g., image), or a function of adding editing objects (e.g., stickers, cutout images, speech bubbles, text, drawing inputs, pen inputs) to a portion of the video.

With reference to FIG. 2, the electronic device 101 may include a processor (e.g., the processor 120 of FIG. 1), a memory (e.g., the memory 130 of FIG. 1), a display (e.g., the display module 160 of FIG. 1), and/or a communication circuit (e.g., the communication module 190 of FIG. 1). For example, the processor 120 of the electronic device 101 may be operatively or electrically connected to the memory 130, the display 160, and the communication circuit 190.

According to an embodiment, the processor 120 may include at least one processor including a processing circuit. According to an embodiment, the memory 130 may store instructions executed individually or collectively by the processor 120 (e.g., at least one processor).

According to an embodiment, the processor 120 of the electronic device 101 may execute a program (e.g., the program 140 of FIG. 1) stored in the memory 130 to control at least one other component (e.g., hardware or software component) and perform various data processing or operations. For example, the processor 120 may execute an application program that provides an editing function on an image (e.g., video, image frame). Based on the application program, the processor 120 may apply specific effects to the image, or may additionally input an editing object (e.g., decoration object) to a portion of the image. For example, the processor 120 may additionally input an editing object to the image by executing the editing function.

According to an embodiment, the processor 120 may include an editing object management module 201 for managing an editing object, and the editing object management module 201 may perform an editing function related to the editing object. For example, in response to performing an editing function, the editing object management module 201 may perform an operation of generating an editing object, inputting an editing object into an image, or removing an editing object added to an image. The editing object management module 201 may perform an operation of storing an editing object in the memory 130, or an operation of loading an editing object stored in the memory 130. According to an embodiment, the electronic device 101 may perform various functions related to an editing object under the control of the editing object management module 201.

According to an embodiment, the memory 130 may include an original image storage area 211 for storing an original image (e.g., first image) based on a video (e.g., image, image frame) captured using a camera (e.g., the camera module 180 of FIG. 1). The memory 130 may include an editing object storage area 212 for storing an editing object according to execution of an editing function. The memory 130 may include a meta data storage area 213 for storing editing meta information related to an editing object according to execution of an editing function. With reference to FIG. 2, the memory 130 may be divided into the original image storage area 211, the editing object storage area 212, and the meta data storage area 213 for a storage space, but is not limited thereto.

According to an embodiment, the original image storage area 211, the editing object storage area 212, and the meta data storage area 213 may be physically separated storage spaces of the memory 130 or may be logically separated storage spaces. According to an embodiment, the electronic device 101 may distinguish and store the original image storage area 211, the editing object storage area 212, and the meta data storage area 213 based on a separate additional memory (not illustrated) rather than the memory 130. According to an embodiment, the electronic device 101 may distinguish the original image storage area 211, the editing object storage area 212, and the meta data storage area 213 based on a storage space of an external device (e.g., a server (the server 108 of FIG. 1), a cloud server) (e.g., a storage space of a cloud server).

According to an embodiment, when performing an editing function on a first image, the electronic device 101 may distinguish between the first image and editing information based on the editing function, and store each separately. For example, the editing information may include an editing object and editing meta information (e.g., editing meta data) related to the editing object. For example, the first image may be stored in the original image storage area 211, an editing object among the editing information may be stored in the editing object storage area 212, and editing meta information among the editing information may be stored in the meta data storage area 213.

According to an embodiment, the processor 120 may store the first image (e.g., original image) according to execution of the editing function and the first editing object additionally input to the first image in the memory 130. For example, the processor 120 may store the first image in the original image storage area 211, and store the first editing object additionally input to the first image in the editing object storage area 212. The processor 120 may store first editing meta information related to the first editing object in the meta data storage area 213. According to an embodiment, in addition to the memory 130, the processor 120 may distinguish and store the first image, the first editing object, and the first editing meta information based on a storage space of a server (e.g., cloud server), which is an external device. According to an embodiment, in the case of loading a first image, the processor 120 may identify a first editing object and first editing meta information corresponding to the first image.

According to an embodiment, when performing a re-editing function on the first image, the processor 120 may identify a first editing object and first editing meta information corresponding to the first image, and additionally input the first editing object to the first image based on the first editing object and the first editing meta information.

According to an embodiment, when storing an editing object according to an editing function in the editing object storage area 212, the processor 120 may divide the entire display area of the editing object into a plurality of blocks, and classify the plurality of blocks into significant blocks and in-significant blocks. For example, the processor 120 may configure a first display area in a rectangular shape based on the size of the editing object. In the case that the editing object is completely included in the first display area, the processor 120 may determine the first display area as the entire display area of the editing object. According to an embodiment, the processor 120 may divide the entire display area including the editing object into a plurality of blocks. For example, the processor 120 may divide the entire display area of the editing object into a plurality of blocks having substantially the same size. As another example, the processor 120 may dynamically divide the entire display area of the editing object into blocks whose size (e.g., block size) and shape are adjusted according to the size and shape of the editing object. According to an embodiment, the plurality of blocks are not limited to blocks having the same size, and the size and shape of the plurality of blocks may be adjusted according to the size and shape of the editing object. For example, the significant block may include a block including at least a portion of the editing object. The in-significant block may include a block that does not include the editing object. According to an embodiment, the electronic device 101 may identify block coordinate information corresponding to each of the plurality of blocks and identify editing object coordinate information corresponding to the editing object. For example, in the case that the block coordinate information and the editing object coordinate information at least partially match, the corresponding block may be classified as a significant block. In the case that the block coordinate information and the editing object coordinate information do not match, the corresponding block may be classified as an in-significant block. According to an embodiment, among a plurality of blocks included in the entire display area, the remaining blocks excluding the significant blocks may be classified as in-significant blocks. According to an embodiment, the in-significant blocks may include at least three blocks having the same pixel value. According to an embodiment, the in-significant block may include a block including pixel information having a fully transparent value (e.g., ARGB(00000000)).

According to an embodiment, the processor 120 may extract at least one first significant block classified as a significant block based on the first editing object, and classify the at least one extracted first significant block as a significant block corresponding to the first editing object. For example, the first editing object may be input based on one layer. The electronic device 101 may arrange side by side at least one first significant block classified as a significant block, and perform an integration operation of integrating the arranged significant blocks into a single block, thereby generating a first integrated block. According to an embodiment, the processor 120 may perform a compression operation on the first integrated block corresponding to the first editing object. The processor 120 may generate compressed data (e.g., first integrated block) by the compression operation, and store the compressed data in the editing object storage area 212.

According to an embodiment, in the case that a second editing object is input after a first editing object is input according to execution of the editing function, the processor 120 may generate a first integrated block corresponding to the first editing object and generate a second integrated block corresponding to the second editing object. For example, in the case that a first integrated block corresponding to the first editing object and a second integrated block corresponding to the second editing object are identified (e.g., in the case that a plurality of integrated blocks are identified), the processor 120 may generate a third integrated block based on the first integrated block and the second integrated block, and perform a compression operation on the third integrated block. The processor 120 may generate compressed data (e.g., third integrated block) by the compression operation, and store the compressed data in the editing object storage area 212.

According to an embodiment, in the case that a plurality of editing objects (e.g., a first editing object, a second editing object) are added to a first image (e.g., original image) according to execution of an editing function, the electronic device 101 may distinguish and recognize the first image and the plurality of editing objects. For example, the electronic device 101 may use detection technology that separately recognizes a background image and a subject while separating the background image (e.g., first image) and the subject (e.g., editing object), and distinguish and recognize the first image corresponding to the background image and the plurality of editing objects corresponding to the subject.

According to an embodiment, in the case that a plurality of editing objects (e.g., a first editing object, a second editing object) are added to a first image (e.g., original image) according to execution of an editing function, the electronic device 101 may hierarchically distinguish the first editing object and the second editing object. For example, when the first editing object is added first, the electronic device 101 may additionally input the first editing object based on the first layer. After the first editing object is added, when the second editing object is added, the electronic device 101 may additionally input the second editing object based on the second layer. For example, the first layer and the second layer may be configured based on the size of the first image and be divided into a plurality of blocks. According to an embodiment, the plurality of blocks may include pixel information having a fully transparent value (e.g., ARGB(00000000)). According to an embodiment, it is not limited to including one editing object per layer. For example, a plurality of editing objects may be input based on one layer.

According to an embodiment, when a first editing object is input based on a first layer, a block including at least a part of the first editing object may include pixel information of a specific value and be classified as a significant block. According to an embodiment, when a first editing object is input based on a first layer, a block not including the first editing object may include pixel information of a fully transparent value (e.g., ARGB(00000000)) and be classified as an in-significant block. The in-significant block may include the remaining blocks excluding the significant block. For example, the electronic device 101 may extract a first significant block corresponding to the first editing object based on the first layer, and extract a second significant block corresponding to the second editing object based on the second layer. The electronic device 101 may allow each editing object to be input for each layer, and distinguish and recognize a first editing object for the first layer and a second editing object for the second layer, even if the editing objects are visually displayed to overlap each other.

According to an embodiment, the processor 120 may acquire coordinate information corresponding to significant blocks and in-significant blocks, and generate index information for each block based on the obtained coordinate information. For example, the processor 120 may extract significant blocks and in-significant blocks based on the index information, and identify a position of each block based on the index information. In response to performing the re-editing function, the processor 120 may identify a position of the editing object based on the index information of the significant blocks constituting the editing object when adding the editing object to the first image (e.g., original image). The processor 120 may additionally input the editing object into the first image, and display a user interface according to the re-editing function through the display (e.g., the display module 160 of FIG. 1).

According to an embodiment, the processor 120 may extract a significant block corresponding to the editing object when storing the editing object in the memory 130, and generate an integrated block based on the extracted significant block. The electronic device 101 may compress the generated integrated block and store the compressed information (e.g., compressed data) in the editing object storage area 212. According to an embodiment, information related to the editing object refers to editing meta information, and the editing meta information may be stored in the meta data storage area 213 of the memory 130. The editing meta information may include at least one of size information, position information, coordinate information, inclination information, color information, brightness information, block size information, significant block information, in-significant block information, input time information, input order information, or index information corresponding to the editing object.

According to an embodiment, the processor 120 may extract only significant blocks corresponding to the editing object, perform a compression operation in a form of an integrated block, and reduce an amount of data for the editing object. For example, first compressed data in which only significant blocks of the editing object are compressed and stored may have a relatively smaller amount of data than that of second compressed data in which the entire image including the editing object (e.g., both the significant blocks and the in-significant blocks) are compressed and stored. According to an embodiment, because the first compressed data has a relatively smaller capacity than that of the second compressed data, a first time required for a compression operation and a decompression operation for the first compressed data may be relatively reduced compared to a second time required for a compression operation and a decompression operation for the second compressed data. According to an embodiment, because the first compressed data has a relatively smaller capacity than that of the second compressed data, the storage space of the memory 130 may be efficiently utilized. According to an embodiment, because the electronic device 101 performs a compression operation by extracting only significant blocks for an editing object, and performs a decompression operation on compressed data composed of only significant blocks, the loading and processing time for the editing object may be relatively fast. According to an embodiment, in the electronic device 101, as a plurality of blocks are integrated and generated as one integrated block, the number of compression and decompression operations may be reduced, and the processing time for the compression operation and the decompression operation may be reduced. According to an embodiment, user convenience according to execution of the editing function may be improved.

According to an embodiment, the electronic device 101 may distinguish and recognize a first image (e.g., original image), an editing object, and editing meta information related to the editing object, and individually store them in different storage areas. According to an embodiment, when performing a re-editing function on the first image, the processor 120 may individually load the first image, the first editing object input to the first image, and the first editing meta information related to the first editing object. The processor 120 may additionally input the first editing object to the first image based on the first editing meta information. When performing the re-editing function, the processor 120 may display an edited image in which a previous editing function is reflected (e.g., an edited image in which the first editing object is additionally input to the first image) through the display (e.g., the display module 160 of FIG. 1).

According to an embodiment, the electronic device 101 may perform a second editing function (e.g., re-editing function) after the first editing function is completed (e.g., after first editing meta information is stored), and update first editing meta information according to execution of the first editing function. For example, the electronic device 101 may load first editing meta information when performing the second editing function, and add second editing meta information according to the second editing function based on the first editing meta information. According to an embodiment, the electronic device 101 may manage and store editing meta information for each version according to the number of times of the editing functions. According to an embodiment, the electronic device 101 may load editing meta information based on a specific version when performing an editing function, and display an edited image reflecting the loaded editing meta information.

According to an embodiment, the processor 120 may display a user interface (UI) of the application program through the display 160 in response to performing an application program providing an editing function. The processor 120 may display a first image (e.g., original image) in response to performing the editing function, and additionally input at least one editing object. According to an embodiment, the processor 120 may identify coordinate information corresponding to a display area based on the display 160, and in the case that at least one editing object is input, the processor 120 may acquire coordinate information corresponding to a position of the at least one editing object. The processor 120 may store and manage information related to at least one editing object (e.g., at least one of size information, position information, coordinate information, inclination information, color information, brightness information, block size information, significant block information, in-significant block information, input time information, input order information, or index information corresponding to the editing object) as editing meta information. According to an embodiment, the processor 120 may distinguish and manage first editing meta information according to a first editing function and second editing meta information according to a second editing function. According to an embodiment, after the first editing function is performed, when the second editing function is performed, the processor 120 may reflect added or changed information based on the first editing meta information and generate second editing meta information. The processor 120 may distinguish and manage the first editing meta information and the second editing meta information, and return to a first edited image at the time at which the first editing function is completed based on the first editing meta information, or return to a second edited image at the time at which the second editing function is completed based on the second editing meta information. According to an embodiment, the electronic device 101 may support a roll back function according to the editing function.

According to an embodiment, the processor 120 may perform network communication with an external electronic device (e.g., the electronic devices 102 and 104 and the server 108 of FIG. 1) through the communication circuit 190. For example, the processor 120 may share data (e.g., data related to an editing function) with the external electronic device through the communication circuit 190. The processor 120 may provide an editing image according to execution of the first editing function to the external electronic device. For example, the editing image may include a first image (e.g., original image) stored in the original image storage area 211, an editing object stored in the editing object storage area 212, and editing meta information stored in the meta data storage area 213. The processor 120 may individually transmit the first image, the editing object, and the editing meta information to the external electronic device so that they are distinguished. For example, in the case that the external electronic device performs a re-editing function, a second editing function may be additionally performed following the editing process according to execution of the first editing function.

According to an embodiment, the processor 120 may acquire an editing object and editing meta information related to the first image from the external electronic device through the communication circuit 190. For example, when performing an editing function on the first image, the processor 120 may reflect the acquired editing object and editing meta information based on the first image. The processor 120 may perform an additional editing function following the editing process performed on the external electronic device.

According to an embodiment, the electronic device 101 may separately distinguish and manage an original image (e.g., an image before performing the editing function) and editing information generated by execution of the editing function. The electronic device 101 may store first editing information according to execution of the first editing function and store second editing information according to execution of the second editing function for the same original image. For example, the second editing information may include additionally generated editing information based on the first editing information. According to an embodiment, the editing information may include information on an editing object additionally input to the original image and editing meta information related to the editing object. For example, the editing meta information (e.g., editing meta data) may include index information indicating a plurality of editing operations occurring in an editing process according to execution of the editing function and an occurrence order of the plurality of editing operations. According to an embodiment, the electronic device 101 may individually distinguish and store the original image (e.g., first image), the editing object, and the editing meta information in the memory 130.

According to an embodiment, the electronic device 101 may individually store a first image (e.g., original image), an editing object, and editing meta information. When performing a re-editing function, the processor 120 may identify an editing order processed in the previous editing function based on the editing meta information, and perform an "undo function" and a "redo function." For example, in the case that a second editing function is performed after a first editing function is performed, the processor 120 may additionally input a second editing object according to the second editing function based on an edited image in which a first editing object is additionally input to the first image based on the first editing function.

According to an embodiment, in the case that an editing object is added to the original image according to execution of the editing function, the electronic device 101 may individually store or manage the editing object. As an amount of data is reduced according to compression of the editing object, the electronic device 101 may reduce the time required to store the compressed editing object in the memory 130. The electronic device 101 may reduce the time required to load even in the case of loading an edited image to which the editing function was previously applied according to execution of the re-editing (e.g., subsequent editing) function. The amount of compressed data for storing the editing object may be reduced, and the time required to store or load the editing object may be reduced. According to an embodiment, user convenience according to execution of the editing function may be improved.

According to an embodiment, the electronic device (e.g., the electronic device 101 of FIGS. 1 and 2) may include a display (e.g., the display module 160 of FIG. 1), a memory (e.g., the memory 130 of FIGS. 1 and 2) storing one or more computer programs, and one or more processors 120 operatively connected to the display 160 and the memory 130. According to an embodiment, when the one or more computer programs are individually or collectively executed by the one or more processors 120, the programs may cause the electronic device 101, in response to performing an editing function on a first image, to identify an editing object added to the first image, to determine a size of at least one block based on information of the editing object, to divide the editing object based on the at least one block of the determined size, to extract at least one significant block in which the editing object is at least partially included from the at least one block, and to store an integrated block generated based on the at least one significant block.

According to an embodiment, when the one or more computer programs are individually or collectively executed by the one or more processors 120, the programs may cause the electronic device 101 to compress the generated integrated block to generate at least one compressed data, and to store the generated at least one compressed data corresponding to the first image in the memory 130.

According to an embodiment, when the one or more computer programs are individually or collectively executed by the one or more processors 120, the programs may cause the electronic device 101, in response to performing a re-editing function on the first image, to identify at least one compressed data corresponding to the first image, to decompress the at least one identified compressed data to identify an integrated block, to identify at least one editing object included in the integrated block, and to add at least one editing object to the first image.

According to an embodiment, when the one or more computer programs are individually or collectively executed by the one or more processors 120, the programs may cause the electronic device 101, in the case that the editing object is a drawing object generated based on a pen input, to determine a size of at least one block based on a thickness of the pen.

According to an embodiment, when the one or more computer programs are individually or collectively executed by the one or more processors 120, the programs may cause the electronic device 101, in the case that the editing object is a preconfigured sticker object, to determine a size of at least one block based on a preconfigured size corresponding to the sticker object.

According to an embodiment, when the one or more computer programs are individually or collectively executed by the one or more processors 120, the programs may cause the electronic device 101 to determine a size of at least one block based on a size of the text object in the case that the editing object is a text object, and to determine a size of at least one block based on a size of the speech bubble in the case that the editing object is a speech bubble object.

According to an embodiment, at least one significant block may include a block whose pixel information is at least partially changed by an input of the editing object based on pixel information based on the first image.

According to an embodiment, when the one or more computer programs are individually or collectively executed by the one or more processors 120, the programs may cause the electronic device 101 to extract the remaining blocks excluding at least one significant block as at least one in-significant block based on the editing object divided into at least one block.

According to an embodiment, when the one or more computer programs are individually or collectively executed by the one or more processors 120, the programs may cause the electronic device 101 to identify a first integrated block generated based on a first editing object among editing objects and having first index information. The processor 120 may identify a second integrated block generated based on a second editing object among editing objects and having second index information. The processor 120 may generate a third integrated block having third index information based on the first integrated block and the second integrated block.

According to an embodiment, when the one or more computer programs are individually or collectively executed by the one or more processors 120, the programs may cause the electronic device 101 to determine a third size of a third integrated block based on a first size of the first integrated block and a second size of the second integrated block, and to generate a third integrated block based on the third size.

According to an embodiment, when the one or more computer programs are individually or collectively executed by the one or more processors 120, the programs may cause the electronic device 101, in response to performing a re-editing function on the first image, to identify at least one compressed data corresponding to the first image, decompress the at least one identified compressed data to identify an integrated block included in the at least one compressed data, to restore at least one editing object based on at least one significant block included in the identified integrated block, and to input at least one restored editing object into the first image.

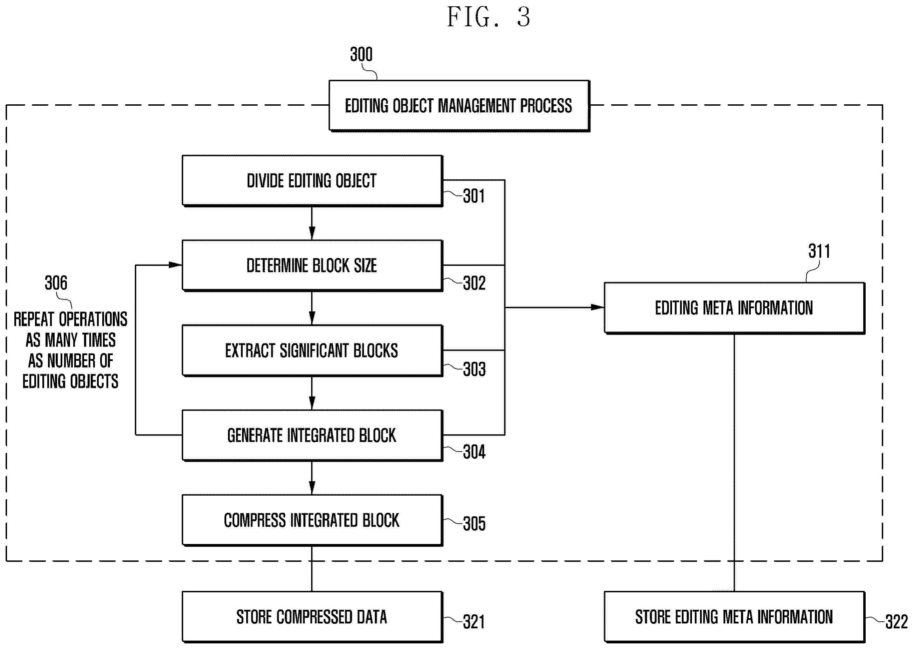

FIG. 3 is an exemplary diagram illustrating an editing object management process according to an embodiment of the disclosure.

In the following embodiments, each operation may be performed sequentially, but is not necessarily performed sequentially. For example, the order of each operation may be changed, and at least two operations may be performed in parallel.

According to an embodiment, operations 300 to 322 may be understood to be performed in the processor (e.g., the processor 120 of FIGS. 1 and 2) of the electronic device (e.g., the electronic device 101 of FIGS. 1 and 2).

An electronic device 101 of FIG. 3 may be at least partially similar to the electronic device 101 of FIGS. 1 and 2, or may further include other components of the electronic device. For example, the electronic device 101 may have an application program that provides an editing function on a first image (e.g., original image) installed in the memory (e.g., the memory 130 of FIGS. 1 and 2). In response to performing an editing function, the electronic device 101 may identify an editing object additionally input to the first image, and individually manage the first image and the editing object.

An editing object management process 300 of FIG. 3 illustrates a storage process of an editing object additionally input to the first image. The electronic device 101 may separate the first image and the editing object and manage them individually.

In operation 301, the processor 120 of the electronic device 101 may separate at least one editing object input to a first image (e.g., original image) from the first image. For example, the first image may be implemented in a structure in which a plurality of layers are hierarchically overlapped. In the case that a first editing object is input to the first image, the processor 120 may additionally input the first editing object based on the first layer. When displaying an edited image to which the first editing object is added based on the first image, the processor 120 may implement the edited image in a form in which the first layer is overlapped on top of the first image, and in this case, the first editing object input to the first layer may be displayed in a form that at least partially overlaps with a portion of the first image. According to an embodiment, the processor 120 may separate and identify the first image and the first editing object input to the first layer.

In operation 302, the processor 120 may determine a size of at least one block for dividing the first editing object. For example, the first editing object may be divided into a plurality of blocks, each of which is configured to a constant size. For example, in the case that the first editing object is a drawing object according to a pen input, the size of at least one block may be determined based on the thickness of the pen. Using the thickness of the pen as a reference value, the size of at least one block may be determined to be smaller or larger than the reference value by a configured length. For example, in the case that the first editing object is a sticker object, the size of at least one block may be determined based on a size (e.g., horizontal length, vertical length) of the sticker object. In the case that the size of the sticker object is configured to a "720*720" pixel size, the processor 120 may determine the size of at least one block to a "720*720" pixel size. For example, in the case that the first editing object is a text object, the size of at least one block may be determined as a preconfigured size of the text object. Alternatively, in the case that the first editing object is a speech bubble object, the size of at least one block may be determined as a preconfigured size of the speech bubble object.

In operation 303, the processor 120 may extract significant blocks based on at least one block that divides the first editing object. For example, the significant blocks may include at least one block in which the editing object is at least partially included. According to an embodiment, the electronic device 101 may identify block coordinate information corresponding to each of a plurality of blocks, and identify first editing object coordinate information corresponding to the first editing object. For example, in the case that the block coordinate information and the first editing object coordinate information at least partially match, a block including the matched coordinate information may be classified as a significant block. In the case that the block coordinate information and the editing object coordinate information do not match, the corresponding block may be classified as an in-significant block. According to an embodiment, among the plurality of blocks, the remaining blocks excluding the significant block may be classified as in-significant blocks. According to an embodiment, the significant block may include at least one block in which coordinate information is changed as the first editing object is added. According to an embodiment, the significant block may include at least one block whose pixel information is at least partially changed due to addition of the first editing object. In contrast, the in-significant block may include at least one block whose pixel information is not changed even if the first editing object is added.

In operation 304, the processor 120 may generate an integrated block based on the extracted significant block. For example, the processor 120 may generate an integrated block of a configured size based on the extracted significant block. The extracted significant block may be implemented in a constant size. The processor 120 may generate integrated blocks in a form in which the significant blocks are disposed side by side in a vertical direction, or may generate integrated blocks in a form in which the significant blocks are disposed side by side in a horizontal direction. According to an embodiment, the size and shape of the integrated block are not limited, and the integrated block may be generated according to preconfigured conditions. According to an embodiment, the size and shape of the integrated block may be determined based on a storage area, a storage space, and a storage method.

In operation 306, the processor 120 may repeat operations 302 to 304 as many times as the number of editing objects added to the first image. For example, if operations 302 to 304 are performed primarily, the processor 120 may generate a first integrated block according to a first cycle. If operations 302 to 304 are performed secondarily, the processor 120 may generate a second integrated block according to a second cycle. The processor 120 may integrate the first integrated block and the second integrated block to generate a third integrated block. According to an embodiment, the processor 120 may store the process and the order in which the integrated block is generated as editing meta information corresponding to the editing object in the memory 130.

In operation 305, the processor 120 may perform a compression operation of compressing the integrated block and generate compressed data. For example, the processor 120 may extract only significant blocks for the first editing object and generate compressed data based on the extracted significant blocks.

According to an embodiment, the processor 120 may perform operations 301 to 306 included in the editing object management process 300, and generate compressed data in which the integrated block is compressed.

In operation 321, the processor 120 may store the generated compressed data in the memory 130 (e.g., the editing object storage area 212 of FIG. 2).

According to an embodiment, the processor 120 may extract significant blocks for the first editing object and generate an integrated block based on the extracted significant blocks. By generating first compressed data based on the integrated block, the processor 120 may reduce an amount of data for the first compressed data. For example, first compressed data in which only significant blocks of the first editing object are compressed and stored may have a relatively smaller amount of data than that of second compressed data in which the entire edited image including the first editing object is compressed and stored.

In operation 311, the processor 120 may acquire information related to the editing object (e.g., editing meta information) while a management process according to operations 301 to 304 is being performed. For example, information related to the editing object may be stored as editing meta information in the memory 130 (e.g., the meta data storage area 213 of FIG. 2). The editing meta information may include at least one of size information, position information, coordinate information, inclination information, color information, brightness information, block size information, significant block information, in-significant block information, input time information, input order information, or index information corresponding to the editing object. According to an embodiment, the processor 120 may distinguish the editing object and the editing meta information (e.g., information related to the editing object) and store them individually in the memory 130.

In operation 322, the processor 120 may store editing meta information (e.g., information related to the editing object) in the meta data storage area 213 of the memory 130.

According to an embodiment, the electronic device 101 may distinguish and recognize a first image (e.g., original image), a first editing object, and editing meta information related to the first editing object (e.g., information related to the first editing object), and individually store them in different storage areas.

According to an embodiment, the electronic device 101 may distinguish and identify the integrated block for each editing object management process 300. For example, the electronic device 101 may individually recognize a first integrated block generated based on the progress of a first editing object management process 300 and a second integrated block generated based on the progress of a second editing object management process 300. For another example, the electronic device 101 may generate an integrated block 1-1 based on the progress of an editing object management process 1-1, 300, and carry out an editing object management process 1-2, 300 in response to performing a re-editing (e.g., subsequent editing) function for the integrated block 1-1. The electronic device 101 may generate an integrated block 1-2 based on the progress of the editing object management process 1-2, 300. In this case, the electronic device 101 may individually distinguish the integrated block 1-1 and the integrated block 1-2, and also distinguish and identify an integrated block 1-3 in which the integrated block 1-1 and the integrated block 1-2 are integrated.

According to an embodiment, when generating an integrated block, the electronic device 101 may generate together index information corresponding to each integrated block, and individually identify each integrated block based on the index information.

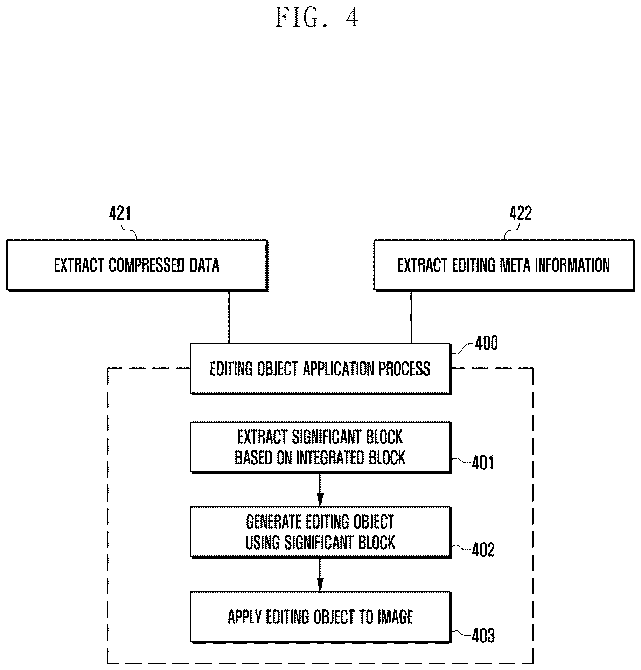

FIG. 4 is an exemplary diagram illustrating an editing object application process according to an embodiment of the disclosure.

In the following embodiments, each operation may be performed sequentially, but is not necessarily performed sequentially. For example, the order of each operation may be changed, and at least two operations may be performed in parallel.

According to an embodiment, operations 400 to 422 may be understood to be performed in the processor (e.g., the processor 120 of FIGS. 1 and 2) of the electronic device (e.g., the electronic device 101 of FIGS. 1 and 2).

An electronic device 101 of FIG. 4 may be at least partially similar to the electronic device 101 of FIGS. 1 and 2, or may further include other components of the electronic device. For example, the electronic device 101 may have an application program that provides an editing function on a first image (e.g., original image) installed in the memory (e.g., the memory 130 of FIGS. 1 and 2). In response to performing a re-editing (e.g., subsequent editing) function, the electronic device 101 may individually identify a first editing object additionally input to the first image and editing meta information corresponding to the first editing object. Based on the editing meta information, the electronic device 101 may restore an edited image in which the first editing object is additionally input to the first image, and display the restored edited image through the display (e.g., the display 160 of FIG. 2).

An editing object application process 400 of FIG. 4 illustrates a process of applying a first editing object corresponding to compressed data to a first image based on editing meta information in response to performing a re-editing function. The electronic device 101 may individually acquire compressed data and editing meta information for the first editing object, and additionally apply the first editing object to the first image (e.g., original image) based on the editing meta information.

In operation 421, the processor 120 may extract compressed data stored in the memory 130 (e.g., the editing object storage area 212). For example, the compressed data may include data in which an integrated block corresponding to the first editing object is compressed, based on the editing object management process 300 of FIG. 3.

In operation 422, the processor 120 may extract editing meta information stored in the memory 130 (e.g., the meta data storage area 213).

The editing object application process 400 of FIG. 4 illustrates a process of loading an edited image in which a first editing object is additionally input to a first image. The electronic device 101 may separate the first editing object and editing meta information and manage them individually.

In operation 401, the processor 120 may decompress compressed data to acquire an integrated block, and extract a significant block based on the obtained integrated block.

In operation 402, the processor 120 may generate an editing object (e.g., first editing object) using the extracted significant block.

In operation 403, the processor 120 may apply the generated editing object (e.g., first editing object) to an image (e.g., original image, first image). For example, the processor 120 may identify coordinate information related to the position and size of the first editing object based on editing meta information, and input the first editing object according to the identified coordinate information in the first image. The processor 120 may input the first editing object in a form that at least partially overlaps with the first image. The processor 120 may display an edited image in which the first editing object is additionally input to the first image through the display 160.

According to an embodiment, the processor 120 may identify a editing order according to execution of the editing function based on editing meta information, and additionally input the first editing object to the first image according to the identified editing order. According to an embodiment, the processor 120 may perform an "undo function" and a "redo function" for the first image based on the identified editing order.

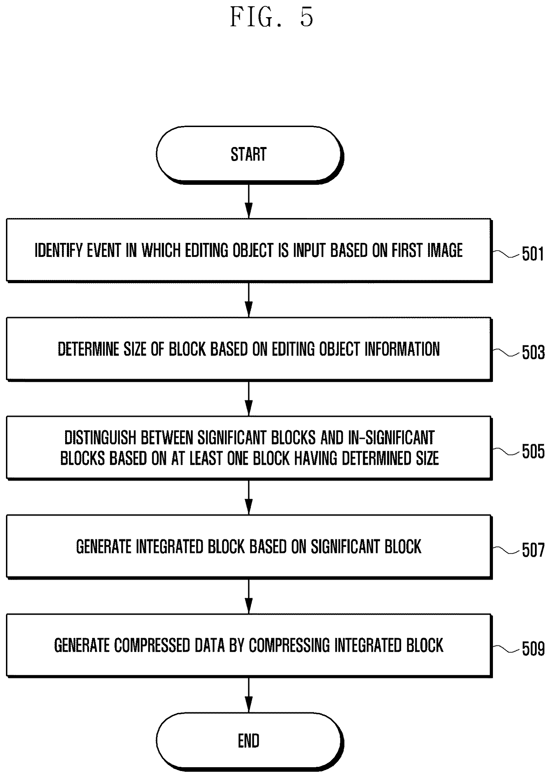

FIG. 5 is a flowchart illustrating a method of managing an editing object according to an embodiment of the disclosure.

In the following embodiments, each operation may be performed sequentially, but is not necessarily performed sequentially. For example, the order of each operation may be changed, and at least two operations may be performed in parallel.

According to an embodiment, operations 501 to 509 may be understood to be performed in a processor (e.g., the processor 120 of FIGS. 1 and 2) of the electronic device (e.g., the electronic device 101 of FIGS. 1 and 2).

An electronic device 101 of FIG. 5 may be at least partially similar to the electronic device 101 of FIGS. 1 and 2, or may further include other components of the electronic device. For example, the electronic device 101 may have an application program that provides an editing function for a first image (e.g., original image) installed in the memory (e.g., the memory 130 of FIGS. 1 and 2). In response to performing an editing function, the electronic device 101 may identify an editing object additionally input to the first image, and individually manage the first image, the editing object, and editing meta information related to the editing object.

In operation 501, the processor 120 of the electronic device 101 may identify an event in which an editing object (e.g., first editing object) is input based on a first image (e.g., original image, image frame). For example, while an application program providing an editing function is running, the processor 120 may identify an event in which an editing object is additionally input according to execution of the editing function based on the first image. For example, the editing object may include at least one of a drawing object according to a pen input (e.g., drawing input), a sticker object, a cutout image, a speech bubble, or a text object. The processor 120 may input an editing object based on the first layer so as to be distinguished from the first image, and identify an event according to the input of the input object. For example, the editing object may be added based on the first layer so as not to change the first image, and be displayed in a form that at least partially overlaps with the first image. The first layer may be displayed in a form that a virtual layer is overlapped on the first image. According to an embodiment, the electronic device 101 may provide the user with an edited image in which at least one editing object included in the first layer is at least partially overlapped on the first image.

In operation 503, the processor 120 may determine a size of a block based on the editing object information. For example, the editing object information may include editing meta information related to the editing object. According to an embodiment, the editing object information may include various types of information related to the editing object to determine whether the editing object is a drawing object, a sticker object, or a text object. For example, in the case that the editing object is a drawing object, the processor 120 may determine a size of a block based on the thickness of an input means (e.g., pen) used to input the drawing object. For another example, in the case that the editing object is a sticker object, the processor 120 may determine a size of a block based on the size (e.g., horizontal length, vertical length) of the sticker object. For another example, the processor 120 may configure a first display area based on the size (e.g., horizontal length, vertical length) and area of the editing object, and identify a first area occupied by the editing object within the first display area and a second area, which is a remaining area excluding the first area within the first display area. According to an embodiment, the first display area is not limited to a specific shape and may be configured in various shapes (e.g., square, circle, polygon, rectangle, non-square). According to another embodiment, the processor 120 may also determine a size of a block based on the identified second area.

In operation 505, the processor 120 may distinguish between significant blocks and in-significant blocks based on at least one block having the determined size. For example, the processor 120 may divide the entire display area of the editing object into at least one block, and determine whether the at least one divided block corresponds to a significant block or an in-significant block.

According to an embodiment, the processor 120 may identify block coordinate information corresponding to each of at least one block, and identify editing object coordinate information corresponding to an editing object. For example, if a first block in which block coordinate information and editing object coordinate information at least partially match is identified, the corresponding first block may be classified as a significant block. If a second block in which block coordinate information and editing object coordinate information do not match is identified, the corresponding second block may be classified as an in-significant block. For example, among a plurality of blocks included in the entire display area, the remaining blocks excluding significant blocks may be classified as in-significant blocks.

According to an embodiment, the in-significant block may include at least three blocks having the same pixel value. For example, the in-significant block may include a block including pixel information having a fully transparent value (e.g., ARGB(00000000)).

According to an embodiment, the significant block may include a block in which pixel information is at least partially changed in response to an event in which an editing object is input. For example, the processor 120 may divide the first layer based on at least one block. The at least one block may be a block including the same pixel information (e.g., ARGB(00000000)). In the case that a pixel object is input based on the first layer, the processor 120 may identify at least one block in which pixel information is at least partially changed according to a position of the input pixel object. The processor 120 may distinguish at least one block in which the pixel information is changed as a significant block. In this case, at least one block in which the pixel information is not changed may be distinguished as an in-significant block. According to an embodiment, the processor 120 may extract at least one block in which an editing object is at least partially included as a significant block.

In operation 507, the processor 120 may generate an integrated block based on the significant block. For example, the processor 120 may arrange side by side at least one block classified as a significant block, and perform an integration operation of integrating the arranged significant blocks into one block to generate an integrated block.

In operation 509, the processor 120 may store compressed data of the integrated block in the memory (e.g., the memory 130 of FIGS. 1 and 2). For example, the processor 120 may perform a compression operation of the integrated block and store compressed data by the compression operation in the editing object storage area (e.g., the editing object storage area 212 of FIG. 2) of the memory 130.

According to an embodiment, in order to maintain the quality (e.g., image quality, resolution) of the editing object, the processor 120 may generate compressed data in PNG format (e.g., PNG file). For example, the processor 120 may generate first compressed data (e.g., data from which only the editing object is separated) according to a PNG format using a lossless compression encoder. In response to performing the re-editing function, the processor 120 may decompress the first compressed data and restore at least one editing object. The processor 120 may add the at least one restored editing object to the first image to restore the first edited image. For example, the first edited image may perform an "undo function" and a "redo function" according to the editing function.

According to another embodiment, in the case that final editing is completed (e.g., in the case that a re-editing function is not required), in order to improve compression efficiency, the processor 120 may generate second compressed data (e.g., data in a state where an editing object is added to the original image) in a lossy manner (lossy compression). For example, the lossy manner includes a lossy compression manner, and may be a compression manner in which, when decompressed, restored data is not accurately the same as the original data, but is restored to be close to the original data. For example, the lossy manner may be a compression manner in which the quality of the data is somewhat degraded, but in which efficiency according to storage and management is improved. The processor 120 may decompress the second compressed data in response to performing the re-editing function, and restore the second edited image in a state where an editing object is added. For example, the second edited image restored based on the lossy manner may not support an "undo function" and a "redo function" according to the editing function. According to another embodiment, in the case of generating second compressed data in a lossy manner, the processor 120 may delete information related to the editing object previously stored in the memory 130. For example, the processor 120 may delete index information (e.g., editing meta information) indicating the editing process and editing order according to the editing function.

According to an embodiment, the processor 120 may identify the average number of times the re-editing function is performed for a specific image according to the usage history of the electronic device 101, and determine whether to perform a compression operation based on the PNG manner (e.g., a lossless compression operation, a compression operation based on the lossless manner) or a compression operation based on the lossy manner (e.g., a lossy compression operation) using the average number of times as a reference value. For example, in the case that the number of times the re-editing function is performed for the first image (e.g., original image) exceeds the average number of times, the processor 120 may perform a compression operation based on the lossy manner. According to an embodiment, the processor 120 may configure a reference value for selecting one of the PNG manner and the lossy manner to an arbitrary value. According to an embodiment, in the case that the number of times the re-editing function is performed exceeds the reference value, the processor 120 may perform a compression operation based on the lossy manner when storing an edited image according to the re-editing function.

According to an embodiment, when performing a compression operation on an edited image, the processor 120 may display a notification window (e.g., pop-up notification window) for selecting one of a PNG manner (e.g., lossless compression manner) and a lossy manner (e.g., lossy compression manner), and generate compressed data in the corresponding manner in response to a user input to the notification window.

According to an embodiment, the electronic device 101 may determine a size of a block corresponding to the editing object in response to an event in which an editing object is input to a first image (e.g., original image), and divide the editing object based on at least one block having the determined size. The electronic device 101 may distinguish a block in which the editing object is at least partially included as a significant block, and extract only the significant block to generate an integrated block. The electronic device 101 may store compressed data in which the integrated block is compressed in the editing object storage area 212.

According to an embodiment, the electronic device 101 may store the first image in the original image storage area 211, store compressed data corresponding to the editing object in the editing object storage area 212, and store edited meta information related to the editing object in the meta data storage area 213. When storing the editing object, the electronic device 101 may extract only a block (e.g., significant block) in which the editing object is at least partially included, and generate an integrated block using only the extracted block (e.g., significant block). The electronic device 101 may perform a compression operation on the integrated block to generate compressed data. According to an embodiment, the electronic device 101 may extract only a significant block for the editing object to generate an integrated block, and compress the generated integrated block, thereby minimizing the capacity of compressed data (e.g., data in which the editing object is compressed). As the capacity of compressed data is reduced, the storage space of the memory 130 may be utilized more freely, and the time required for a compression operation (e.g., operation of generating compressed data) and a decompression operation may be reduced. According to an embodiment, as an integrated block is generated based on only significant blocks, the capacity of the editing object may be reduced, and the processing time for a compression operation and a decompression operation may be reduced. According to an embodiment, as a plurality of blocks are integrated into one integrated block, the number of compressions and decompressions may be reduced, and the processing time for a compression operation and a decompression operation may be reduced.

According to an embodiment, in the case of performing a re-editing function on the first image, the electronic device 101 may load compressed data stored in the editing object storage area 212 and editing meta information stored in the meta data storage area 213. The electronic device 101 may decompress the compressed data to extract a significant block included in the integrated block. The electronic device 101 may restore the editing object based on the extracted significant block. In response to performing the re-editing function, the electronic device 101 may additionally input the restored editing object to the first image (e.g., original image) based on the editing meta information. According to an embodiment, as the capacity of the compressed data is reduced, the time required to perform the compression operation and the decompression operation may be reduced. According to an embodiment, as a plurality of blocks are integrated into one integrated block, the number of compressions and the number of decompressions may be reduced, and the processing time for the compression operation and the decompression operation may be reduced.

According to an embodiment, in the case that a plurality of editing objects (e.g., a first editing object, a second editing object) are input, the electronic device 101 may hierarchically add the first editing object and the second editing object to the first image. For example, the electronic device 101 may input the first editing object based on the first layer, and input the second editing object based on the second layer. The electronic device 101 may extract at least one first block in which the first editing object is at least partially included as a first significant block. The electronic device 101 may extract at least one second block in which the second editing object is at least partially included as a second significant block. The electronic device 101 may individually extract a significant block corresponding to each of the plurality of editing objects.

According to an embodiment, in generating an integrated block, the electronic device 101 may generate a first integrated block corresponding to a first editing object and a second integrated block corresponding to a second editing object. The size of the first integrated block may be determined based on the size of the first significant block. The size of the second integrated block may be determined based on the size of the second significant block. As another example, the electronic device 101 may integrate the first integrated block and the second integrated block to generate a third integrated block. The size of the third integrated block may be determined based on the size of the first integrated block and the size of the second integrated block. According to an embodiment, the electronic device 101 may generate first compressed data based on the first integrated block and second compressed data based on the second integrated block. The electronic device 101 may generate third compressed data based on the third integrated block.

According to an embodiment, the electronic device 101 may individually store at least one editing object and editing meta information in various ways. For example, the electronic device 101 may additionally store at least one editing object and editing meta information within the first image, store at least one editing object and editing meta information within a database (DB) of the memory 130, store at least one editing object and editing meta information in a specific storage area of the memory 130, or store at least one editing object and editing meta information in an external device (e.g., server, cloud server).

According to an embodiment, the first image (e.g., original image), at least one editing object, and editing meta information may be individually stored in a state in which they are matched with each other.

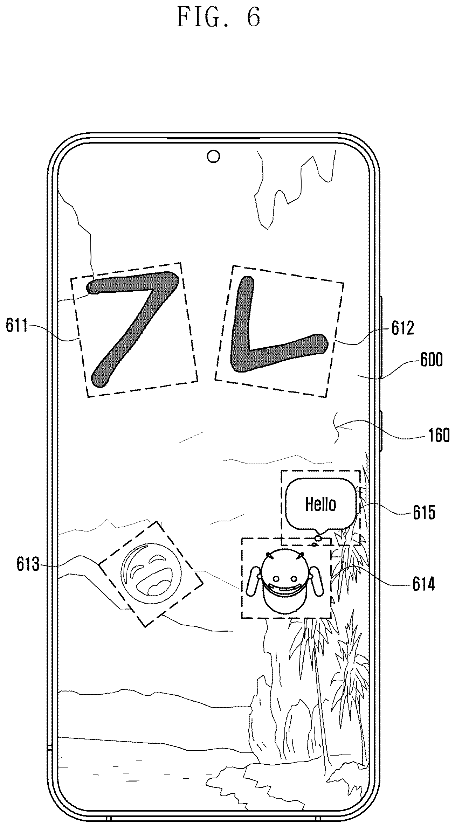

FIG. 6 is an exemplary diagram illustrating a method of extracting at least one editing object from an image or video according to an embodiment of the disclosure.

An electronic device 101 of FIG. 6 may be at least partially similar to the electronic device 101 of FIGS. 1 and 2, or may further include other components of the electronic device. For example, the electronic device 101 may have an application program that provides an editing function for a first image (e.g., original image) installed in the memory (e.g., the memory 130 of FIGS. 1 and 2). In response to performing an editing function, the electronic device 101 may identify an editing object additionally input to the first image, and individually manage the first image, the editing object, and editing meta information related to the editing object.

With reference to FIG. 6, the processor (e.g., the processor 120 of FIGS. 1 and 2) of the electronic device 101 may display a first image 600 (e.g., original image, image frame) and at least one of editing objects 611, 612, 613, 614, and 615 disposed to at least partially overlap with the first image 600 through the display (e.g., the display module 160 of FIG. 1). For example, in response to performing an editing function, the processor 120 may display the first image 600 and identify an event in which at least one of editing objects 611, 612, 613, 614, and 615 is input.

With reference to FIG. 6, according to an embodiment, a first editing object 611 and a second editing object 612 may include drawing objects using a finger or a pen. For example, the first editing object 611 may be a drawing object with the letter " 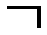 " drawn on it, and the second editing object 612 may be a drawing object with the letter " 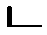 " drawn on it. A third editing object 613 and a fourth editing object 614 may be sticker objects. A fifth editing object 615 may be a speech bubble object. At least one of the editing objects 611, 612, 613, 614, and 615 may include at least one of a drawing object, a sticker object, a cutout image, a speech bubble, or a text object according to a pen input (e.g., drawing input).

According to an embodiment, the electronic device 101 may recognize the order and position in which at least one of the editing objects 611, 612, 613, 614, and 615 is input in a hierarchical manner. For example, the first editing object 611 may be input based on the first layer, and the second editing object 612 may be input based on the second layer. The electronic device 101 may identify index information indicating the order in which the editing objects are input. For example, when the first editing object 611 is input, the electronic device 101 may generate index information (e.g., editing meta information) indicating the input order of the first editing object 611 (e.g., editing order according to an editing function). For example, the editing meta information may include at least one of size information, position information, coordinate information, inclination information, color information, brightness information, block size information, significant block information, in-significant block information, input time information, input order information, or index information corresponding to the editing object. When the first editing object 611 is stored in the memory (e.g., the memory 130 of FIGS. 1 and 2), the electronic device 101 may store index information (e.g., editing meta information) corresponding to the first editing object 611 together with the first editing object 611.

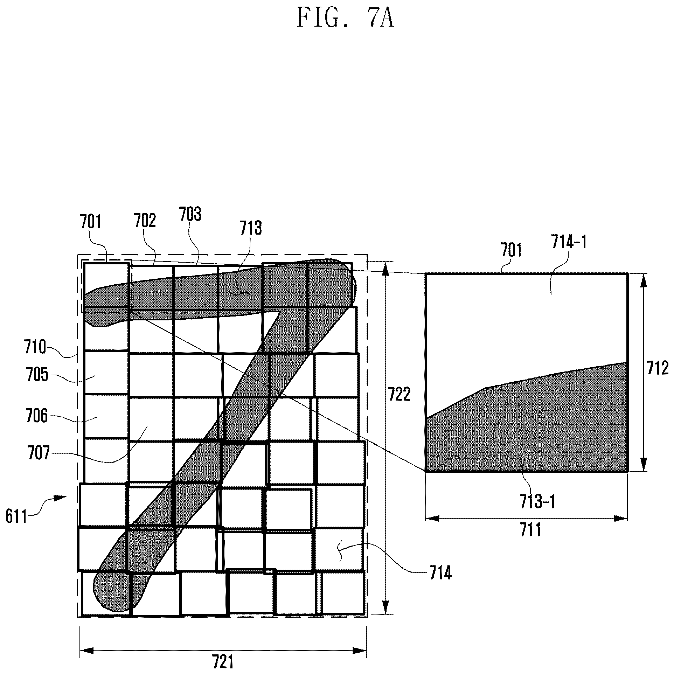

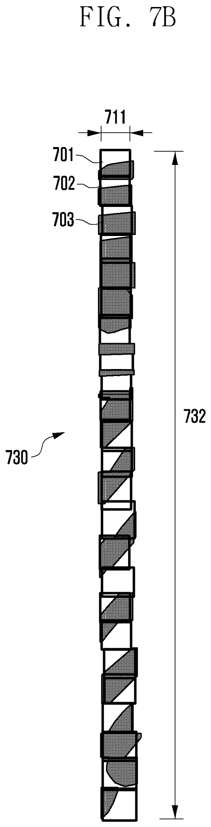

FIG. 7A is a diagram of an example 1-1 illustrating a method of determining a size of a block based on an editing object according to an embodiment of the disclosure. FIG. 7B is a diagram of an example 1-2 illustrating a method of integrating and managing extracted significant blocks according to an embodiment of the disclosure.

An electronic device 101 of FIGS. 7A and 7B may be at least partially similar to the electronic device 101 of FIGS. 1 and 2, or may further include other components of the electronic device.

With reference to FIG. 7A, a first display area 710 of the first editing object 611 of FIG. 6 is illustrated. The processor 120 of the electronic device 101 may identify an event in which the first editing object 611 is input, and identify a first display area 710 for the first editing object 611. The first editing object 611 may include a drawing object (e.g., " 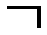 " object) using a pen. For example, the processor 120 may identify coordinate information corresponding to the first display area 710, and identify a horizontal length 721 and a vertical length 722 of the first display area 710. The processor 120 may identify coordinate information and pixel information of the first editing object 611 based on the first layer. Based on the first layer and in response to an input in which pixel information is changed, the processor 120 may identify a first area 713 corresponding to the first editing object 611 within the first display area 710 and a second area 714, which is the remaining area excluding the first area 713 within the first display area 710.

With reference to FIG. 7A, the first editing object 611 may include a drawing object generated based on a user's gesture input (e.g., drag input, drawing input, touch input) using an input means (e.g., pen) of a certain thickness. According to an embodiment, the processor 120 may determine a size of at least one of blocks 701, 702, and 703 (e.g., a horizontal length 711 of a block, a vertical length 712 of a block) based on the thickness of the input means (e.g., pen).

According to an embodiment, the processor 120 may divide the first display area 710 of the first editing object 611 into at least one of blocks 701, 702, 703, 705, 706, and 707. The processor 120 may distinguish a first area 713 and a second area 714 for the first editing object 611 within the at least one of blocks 701, 702, 703, 705, 706, and 707. For example, the processor 120 may distinguish an area 1-1, 713-1 in which pixel information is changed and an area 2-1, 714-1 in which pixel information is not changed, based on the first block 701. The processor 120 may determine at least one of blocks 701, 702, and 703 in which pixel information is at least partially changed by an input of the first editing object 611, among a plurality of blocks dividing the first display area 710, as first significant blocks. The processor 120 may determine at least one block in which pixel information is not changed, among a plurality of blocks dividing the first display area 710, as first in-significant blocks 705, 706, and 707. For example, each of the plurality of blocks dividing the first display area 710 may include index information (e.g., editing meta information) indicating a position. When re-editing, the processor 120 may restore the first editing object 611 based on the index information for the first editing object 611, and additionally input the restored first editing object 611 to the first image (e.g., original image).

According to an embodiment, the index information may include information on the first significant blocks, their respective positions, orders, and coordinate values. According to an embodiment, when restoring the first editing object 611, the electronic device 101 may determine a position and order of each significant block based on the index information on the first significant block. The electronic device 101 may restore an edited image in which the first editing object 611 is at least partially overlapped with the first image, and display the restored edited image through the display 160.

With reference to FIG. 7B, the processor 120 may extract at least one first significant block from a plurality of blocks dividing the first display area 710, and generate a first integrated block 730 based on the at least one extracted first significant block. For example, the first significant block may include at least one of blocks 701, 702, and 703 in which pixel information is at least partially changed by an input of the first editing object 611. The processor 120 may generate a first integrated block 730 composed only of the first significant blocks. For example, the first integrated block 730 may be implemented in a structure in which at least one of blocks 701, 702, and 703 is coupled side by side. A horizontal length 711 of the first integrated block 730 may be substantially the same as a horizontal length 711 of the first block 701. A vertical length 732 of the first integrated block 730 may be a length obtained by summing the vertical lengths 712 of the first block 701 as many times as the number of significant blocks. According to an embodiment, the shape of the first integrated block 730 is not limited to a specific shape, and may be implemented in various shapes according to the storage space and storage method.

According to an embodiment, the processor 120 may generate a first integrated block 730 based on the extracted significant block, and also generate first index information corresponding to the first integrated block 730. The processor 120 may perform a compression operation on the first integrated block 730 and generate first compressed data.

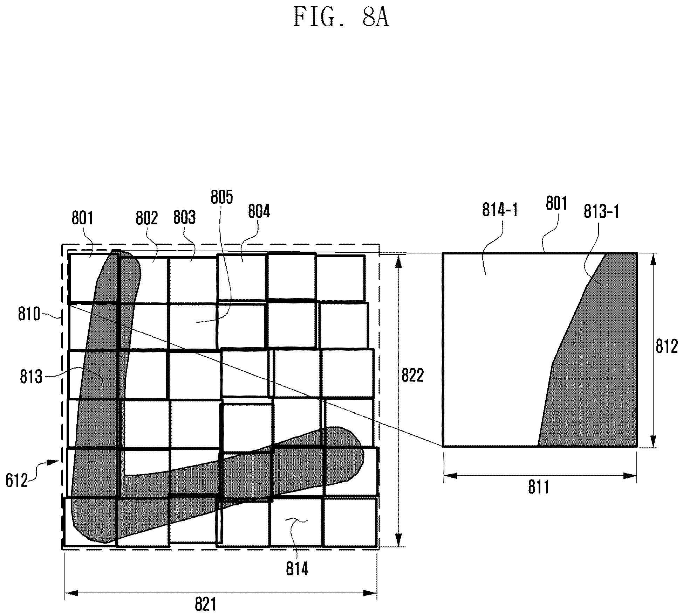

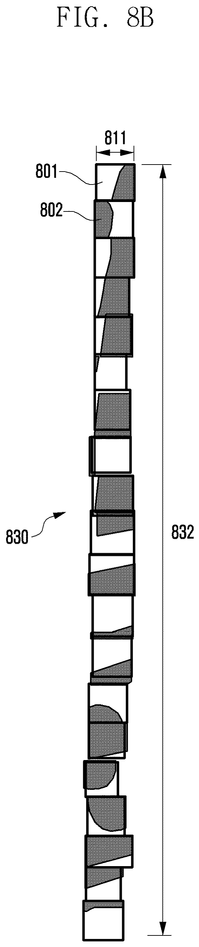

FIG. 8A is a diagram of an example 2-1 illustrating a method of determining a size of a block based on an editing object according to an embodiment of the disclosure. FIG. 8B is a diagram of an example 2-2 illustrating a method of integrating and managing extracted significant blocks according to an embodiment of the disclosure.

An electronic device 101 of FIGS. 8A and 8B may be at least partially similar to the electronic device 101 of FIGS. 1 and 2, or may further include other components of the electronic device.

With reference to FIG. 8A, a second display area 810 of the second editing object 612 of FIG. 6 is illustrated. The processor 120 of the electronic device 101 may identify an event in which the second editing object 612 is input, and identify a second display area 810 for the second editing object 612. The second editing object 612 may include a drawing object (e.g., " 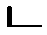 " object) using a pen. For example, the processor 120 may identify coordinate information corresponding to the second display area 810, and identify a horizontal length 821 and a vertical length 822 of the second display area 810. The processor 120 may identify coordinate information and pixel information of the second editing object 612 based on the second layer. Based on the second layer and in response to an input that changes pixel information, the processor 120 may identify a third area 813 corresponding to the second editing object 612 within the second display area 810 and a fourth area 814, which is the remaining area excluding the third area 813 within the second display area 810.

With reference to FIG. 8A, the second editing object 612 may include a drawing object generated based on a user's gesture input (e.g., drag input, drawing input, touch input) using an input means (e.g., pen) having a certain thickness. According to an embodiment, the processor 120 may determine a size (e.g., a horizontal length 811 of the block, a vertical length 812 of the block) of at least one of blocks 801, 802, 803, 804, and 805 based on the thickness of the input means (e.g., pen).

According to an embodiment, the processor 120 may divide the second display area 810 of the second editing object 612 into at least one of blocks 801, 802, 803, 804, and 805. The processor 120 may distinguish a third area 813 and a fourth area 814 for the second editing object 612 within the at least one of blocks 801, 802, 803, 804, and 805. For example, the processor 120 may distinguish between an area 3-1, 813-1 in which pixel information is changed and an area 4-1, 814-1 in which pixel information is not changed, based on a first block 801. The processor 120 may determine at least one of blocks 801 and 802 in which pixel information is at least partially changed by an input of the second editing object 612 among a plurality of blocks dividing the second display area 810 as a second significant block. The processor 120 may determine at least one block in which the pixel information is not changed among a plurality of blocks dividing the second display area 810 as second in-significant blocks 803, 804, and 805. For example, each of the plurality of blocks dividing the second display area 810 may include index information (e.g., editing meta information) indicating a position. When re-editing, the processor 120 may restore the second editing object 612 based on the index information on the second editing object 612, and additionally input the restored second editing object 612 into the first image (e.g., original image).

According to an embodiment, the index information may include information on the second significant blocks, their respective positions, order, and coordinate values. According to an embodiment, when restoring the second editing object 612, the electronic device 101 may determine a position and order of each significant block based on the index information on the second significant block. The electronic device 101 may restore an edited image in which the second editing object 612 is at least partially overlapped with the first image, and display the restored edited image through the display 160.

With reference to FIG. 8B, the processor 120 may extract at least one second significant block from a plurality of blocks dividing the second display area 810, and generate a second integrated block 830 based on the at least one extracted second significant block. For example, the second significant block may include at least one of blocks 801, 802, and 803 in which pixel information is at least partially changed by an input of the second editing object 612. The processor 120 may generate a second integrated block 830 composed only of the second significant blocks. For example, the second integrated block 830 may be implemented in a structure in which at least one of blocks 801 and 802 (e.g., significant block) is coupled side by side. A horizontal length 811 of the second integrated block 830 may be substantially the same as a horizontal length 811 of the first block 801. A vertical length 832 of the second integrated block 830 may be a length obtained by summing vertical lengths 812 of the first block 801 as many times as the number of significant blocks. According to an embodiment, the shape of the second integrated block 830 is not limited to a specific shape, and may be implemented in various shapes according to the storage space and storage method.

According to an embodiment, the processor 120 may generate a second integrated block 830 based on the extracted significant block, and also generate second index information corresponding to the second integrated block 830. The processor 120 may perform a compression operation on the second integrated block 830 and generate second compressed data.

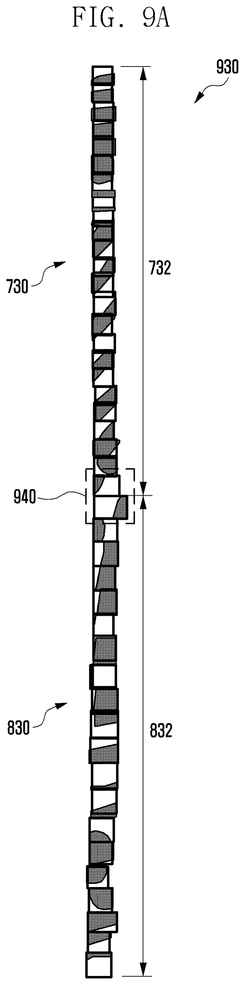

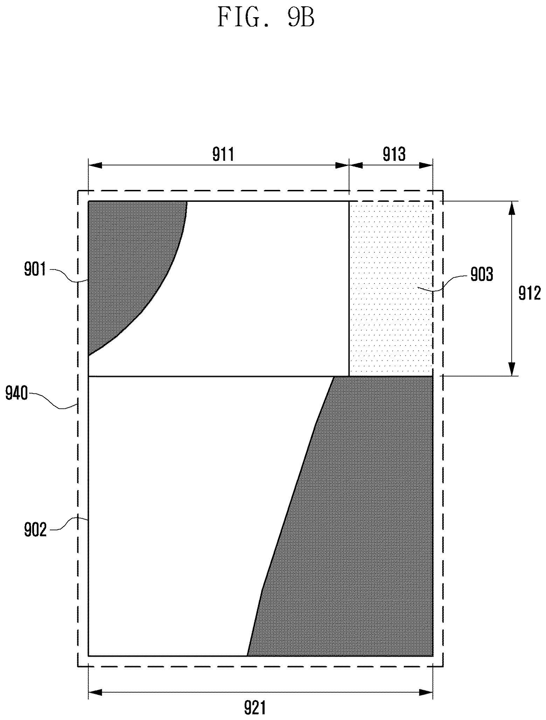

FIG. 9A is a diagram of an example 3-1 illustrating a method of synthesizing a first integrated block based on a first editing object and a second integrated block based on a second editing object into a single block and managing the synthesized block according to an embodiment of the disclosure. FIG. 9B is a diagram of an example 3-2 illustrating a method of managing the remaining storage areas according to the difference in block sizes when synthesizing a plurality of integrated blocks into a single block according to an embodiment of the disclosure.

An electronic device 101 of FIGS. 9A and 9B may be at least partially similar to the electronic device 101 of FIGS. 1 and 2 or may further include other components of the electronic device.

With reference to FIG. 9A, the first integrated block 730 of FIG. 7B and the second integrated block 830 of FIG. 8B are illustrated. The processor 120 of the electronic device 101 may couple or integrate the first integrated block 730 and the second integrated block 830 to generate a third integrated block 930. For example, the first integrated block 730 may be generated based on a first significant block corresponding to a first editing object (e.g., the first editing object 611 of FIG. 7A), and the second integrated block 830 may be generated based on a second significant block corresponding to a second editing object (e.g., the second editing object 612 of FIG. 8A). The processor 120 may integrate the first integrated block 730 and the second integrated block 830 into one and generate a third integrated block 930.

According to an embodiment, the processor 120 may integrate the first integrated block 730 and the second integrated block 830 to generate a third integrated block 930. The processor 120 may perform a compression operation on the third integrated block 930 and generate third compressed data.

With reference to FIG. 9A, according to an embodiment, a horizontal length of the third integrated block 930 may be determined as a relatively longer horizontal length among a horizontal length of the first integrated block 730 and a horizontal length of the second integrated block 830. The vertical length of the third integrated block 930 may be determined as a length obtained by summing a vertical length 732 of the first integrated block 730 and a vertical length 832 of the second integrated block 830.

With reference to FIG. 9A, a shape of the first integrated block 730 and a shape of the second integrated block 830 are not the same, and a residual space may occur in a situation where the first integrated block 730 and the second integrated block 830 are coupled.

With reference to FIG. 9B, a coupled area 940 where the first integrated block 730 and the second integrated block 830 are coupled in FIG. 9A is enlarged and illustrated. With reference to FIG. 9B, a structure in which a first block 901 included in the first integrated block 730 and a second block 902 included in the second integrated block 830 are coupled is illustrated.

With reference to FIG. 9B, a first horizontal length 911 of the first block 901 may be relatively shorter than a second horizontal length 921 of the second block 902. In a structure in which the first block 901 and the second block 902 are coupled, a residual space 903 may be generated. For example, a horizontal length 913 of the residual space 903 may be determined as a difference value between the first horizontal length 911 and the second horizontal length 921, and a vertical length 912 of the residual space 903 may be determined to be substantially the same length as the vertical length of the first block 901. For example, in the case that the residual space 903 has the size that may add one more first block 901, the processor 120 of the electronic device 101 may dispose another block included in the first integrated block 730 in the residual space 903. The electronic device 101 may change the disposition structure of at least one block based on the residual space 903.

According to an embodiment, the electronic device 101 may identify the residual space based on the first integrated block 730 and the second integrated block 830 when generating the third integrated block 930. The electronic device 101 may change a disposition structure of at least one of the first integrated block 730 or the second integrated block 830 based on the identified residual space.

According to an embodiment, the electronic device 101 may store first index information corresponding to the first integrated block 730 by matching it with the first integrated block 730, and store second index information corresponding to the second integrated block 830 by matching it with the second integrated block 830. The electronic device 101 may store third index information corresponding to the third integrated block 930 by matching it with the third integrated block 830. For example, the third index information may include first index information and second index information. The third index information may include information related to the disposition position and integration order of the first integrated block 730 and the second integrated block 830.

According to an embodiment, the electronic device 101 may perform a compression operation on the third integrated block 930 and generate third compressed data. The electronic device 101 may generate third compressed data including a plurality of editing objects by a single compression operation. For example, in a situation where the electronic device 101 performs a re-editing function on the third compressed data, the electronic device 101 may restore a plurality of editing objects by a single decompression operation. According to an embodiment, the electronic device 101 may reduce a storage capacity for editing objects by compressing significant blocks by integrating them, and as the number of compressions is reduced, the time required for storing editing objects may be reduced.

According to an embodiment, in the case that an editing object is added to an original video according to execution of the editing function, the electronic device 101 may individually store or manage the editing object. As an amount of data is reduced according to compression of the editing object, the electronic device 101 may reduce the time required to store the compressed editing object in the memory 130. The electronic device 101 may reduce the time required to load even in the case of loading an edited image to which the editing function was previously applied according to execution of the re-editing function. The amount of compressed data for storing the editing object may be reduced, and the time required to store or load the editing object may be reduced. According to an embodiment, user convenience according to execution of the editing function may be improved.

A method of managing an editing object according to an embodiment may include, in response to performing an editing function on a first image, identifying an editing object added to the first image, determining a size of at least one block based on information of the editing object, dividing the editing object based on at least one block of the determined size, extracting at least one significant block in which the editing object is at least partially included from the at least one block, and storing an integrated block generated based on the at least one significant block.

A method according to an embodiment may further include generating at least one compressed data by compressing the generated integrated block, and storing the generated at least one compressed data corresponding to the first image.

A method according to an embodiment may further include, in response to performing a re-editing function on the first image, identifying the at least one compressed data corresponding to the first image, identifying the integrated block by decompressing the identified at least one compressed data, identifying at least one editing object included in the integrated block, and adding the at least one editing object to the first image.

According to an embodiment, determining a size of at least one block may include determining a size of the at least one block based on thickness of the pen in the case that the editing object is a drawing object generated based on a pen input, determining a size of the at least one block based on a preconfigured size corresponding to the sticker object in the case that the editing object is a preconfigured sticker object, determining a size of the at least one block based on a size of the text object in the case that the editing object is a text object, and determining a size of the at least one block based on a size of the speech bubble in the case that the editing object is a speech bubble object.

According to an embodiment, extracting at least one significant block may include extracting a block in which the pixel information is at least partially changed by an input of the editing object, based on pixel information based on the first image, as the at least one significant block.

A method according to an embodiment may further include extracting the remaining blocks excluding the at least one significant block as at least one in-significant block based on the editing object divided into at least one block.

A method according to an embodiment may further include identifying a first integrated block generated based on a first editing object among the editing objects and having first index information, identifying a second integrated block generated based on a second editing object among the editing objects and having second index information, and generating a third integrated block having third index information based on the first integrated block and the second integrated block.

A method according to an embodiment may further include determining a third size of the third integrated block based on a first size of the first integrated block and a second size of the second integrated block, and generating the third integrated block based on the third size.

A method according to an embodiment may further include, in response to performing a re-editing function on the first image, identifying the at least one compressed data corresponding to the first image, identifying the integrated block included in the at least one compressed data by decompressing the identified at least one compressed data, restoring the at least one editing object based on the at least one significant block included in the identified integrated block, and inputting the at least one restored editing object into the first image.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 101, comprising:
a display 160;
a memory 130 configured to store one or more computer programs; and
one or more processors 120 operatively connected to the display 160 and the memory 130,
when the one or more computer programs are individually or collectively executed by the one or more processors 120, the programs cause the electronic device 101 to:
identify an editing object added to the first image in response to performing an editing function on the first image,
determine a size of at least one block based on information of the editing object,
divide the editing object based on at least one block of the determined size,
extract at least one significant block in which the editing object is at least partially included from the at least one block, and
store an integrated block generated based on the at least one significant block.

2. The electronic device of claim 1, wherein, when the one or more computer programs are individually or collectively executed by the one or more processors 120, the programs cause the electronic device 101 to:
compress the generated integrated block to generate at least one compressed data, and
store the generated at least one compressed data in the memory 130 in response to the first image.

3. The electronic device of claim 1 or 2, wherein, when the one or more computer programs are individually or collectively executed by the one or more processors 120, the programs cause the electronic device 101 to:
identify the at least one compressed data corresponding to the first image in response to performing a re-editing function on the first image,
decompress the identified at least one compressed data to identify the integrated block,
identify at least one editing object included in the integrated block, and
add the at least one editing object to the first image.

4. The electronic device of claim 1, wherein, when the one or more computer programs are individually or collectively executed by the one or more processors 120, the programs cause the electronic device 101 to:
determine a size of the at least one block based on a thickness of the pen, in the case that the editing object is a drawing object generated based on an pen input, and
determine a size of the at least one block based on a preconfigured size corresponding to the sticker object, in the case that the editing object is a preconfigured sticker object.

5. The electronic device of claim 1, wherein, when the one or more computer programs are individually or collectively executed by the one or more processors 120, the programs cause the electronic device 101 to:
determine a size of the at least one block based on a size of the text object, in the case that the editing object is a text object, and
determine a size of the at least one block based on a size of the speech bubble, in the case that the editing object is a speech bubble object.

6. The electronic device of claim 1, wherein the at least one significant block comprises a block in which the pixel information is at least partially changed by an input of the editing object based on pixel information based on the first image.

7. The electronic device of claim 6, wherein, when the one or more computer programs are individually or collectively executed by the one or more processors 120, the programs cause the electronic device 101 to extract the remaining blocks excluding the at least one significant block as at least one in-significant block based on the editing object divided into the at least one block.

8. The electronic device of claim 1, wherein, when the one or more computer programs are individually or collectively executed by the one or more processors 120, the programs cause the electronic device 101 to:
identify a first integrated block generated based on a first editing object among the editing objects and having first index information,
identify a second integrated block generated based on a second editing object among the editing objects and having second index information,
generate a third integrated block having third index information based on the first integrated block and the second integrated block,
determine a third size of the third integrated block based on a first size of the first integrated block and a second size of the second integrated block, and
generate the third integrated block based on the third size.

9. The electronic device of claim 2 or 3, wherein, when the one or more computer programs are individually or collectively executed by the one or more processors 120, the programs cause the electronic device 101 to:
identify the at least one compressed data corresponding to the first image in response to performing a re-editing function on the first image,
decompress the identified at least one compressed data to identify the integrated block included in the at least one compressed data,
restore the at least one editing object based on the at least one significant block included in the identified integrated block, and
input the at least one restored editing object into the first image.

10. A method of managing an editing object, the method comprising:
identifying an editing object added to the first image in response to performing an editing function on a first image;
determining a size of at least one block based on information of the editing object;
dividing the editing object based on at least one block of the determined size;
extracting at least one significant block in which the editing object is at least partially included from the at least one block; and
storing an integrated block generated based on the at least one significant block.

11. The method of claim 10, further comprising:
generating at least one compressed data by compressing the generated integrated block; and
storing the generated at least one compressed data corresponding to the first image.

12. The method of claim 11, further comprising:
identifying the at least one compressed data corresponding to the first image in response to performing a re-editing function on the first image;
identifying the integrated block by decompressing the identified at least one compressed data;
identifying at least one editing object included in the integrated block; and
adding the at least one editing object to the first image.

13. The method of claim 10, wherein determining a size of at least one block further comprises:
determining a size of the at least one block based on a thickness of the pen, in the case that the editing object is a drawing object generated based on an pen input;
determining a size of the at least one block based on a preconfigured size corresponding to the sticker object, in the case that the editing object is a preconfigured sticker object;
determining a size of the at least one block based on a size of the text object, in the case that the editing object is a text object; and
determining a size of the at least one block based on a size of the speech bubble, in the case that the editing object is a speech bubble object.

14. The method of claim 10, further comprising:
extracting a block in which the pixel information is at least partially changed by an input of the editing object based on pixel information based on the first image as the at least one significant block; and
extracting the remaining blocks excluding the least one significant block as at least one in-significant block based on the editing object divided into the at least one block.

15. The method of any one of claims 10 to 12, further comprising:
identifying the at least one compressed data corresponding to the first image in response to performing a re-editing function on the first image;
identifying the integrated block included in the at least one compressed data by decompressing the identified at least one compressed data;
restoring the at least one editing object based on the at least one significant block included in the identified integrated block; and
inputting the at least one restored editing object into the first image.
